# EUROPÄISCHE PATENTSCHRIFT

(11) **EP 2 407 247 B1**
(45) Veröffentlichungstag und Bekanntmachung des Hinweises auf die Patenterteilung: **31.08.2016**
(21) Anmeldenummer: 11008307.8
(22) Anmeldetag: 18.07.2003
(51) Int. Cl.: B05B 5/04, B05B 3/10, F01D 9/02, F01D 5/22, F01D 15/00, F02C 1/00, F01D 1/22, F01D 15/06

(54) **Turbinenmotor eines Rotationszerstäubers**
Turbine of a rotary dispenser
Turbine de pulvérisateur rotatif

(30) Priorität: 22.07.2002 DE 10233199
(43) Veröffentlichungstag der Anmeldung: 18.01.2012
(62) Teilanmeldung aus: 03016336.4
(73) Patentinhaber: Dürr Systems GmbH, 74321 Bietigheim-Bissingen (DE)
(72) Erfinder: Baumann, Michael, 74223 Flein (DE); Herre, Frank, 71739 Oberriexingen (DE); Nolte, Hans-Jürgen, 74354 Besigheim (DE); Krumma, Harry, 74357 Bönnigheim (DE); Giuliano, Stefano, 71254 Ditzingen (DE); Lind, Björn, 411 18 Göteborg (SE)
(74) Vertreter: Beier, Ralph

(56) Entgegenhaltungen:
- DE-A1- 1 426 847
- DE-C- 560 836
- FR-A1- 2 584 314
- GB-A- 2 097 291
- US-A- 3 804 335

## Beschreibung

Die Erfindung betrifft einen als Antrieb für den Glockenteller eines Rotationszerstäubers verwendbaren Turbinenmotor gemäss dem Oberbegriff des Anspruchs 1. Ferner betrifft die Erfindung einen Rotationszerstäuber mit einem solchen Turbinenmotor.

Insbesondere handelt es sich um Hochrotationszerstäuber für die elektrostatische Serienbeschichtung von Werkstücken wie beispielsweise Fahrzeugkarossen. Zum Antrieb des Glockentellers derartiger Zerstäuber (DE 43 06 80, EP 0 796 663 B1) dienen bekanntlich mit Druckluft betriebene Radialturbinen, deren den Glockenteller tragende Hohlwelle in einem Luftlager rotiert. Die Radialturbine kann entweder tangential angeströmt oder radial durchströmt werden. Im letztgenannten Fall besteht das Turbinenrad aus einer in einem weitgehend geschlossenen zylindrischen Innenraum der Lagereinheit der Antriebwelle rotierenden Scheibe, der auf ihrer einen Stirnfläche in der Nähe des Umfangs Turbinenblätter angeformt sind. Die Antriebsluft durchströmt die Turbinenblätter radial in einem Kanal, der auf seiner einen Seite von dem Turbinenrad und im bekannten Fall auf seiner entgegengesetzten Seite durch einen feststehenden Teil der Lagereinheit begrenzt ist. Die Antriebsluft gelangt in diesen Antriebskanal durch einen oder mehrere Zuleitungskanäle, die in einer Düse münden, deren im Querschnitt z.B. viereckige Öffnung im bekannten Fall den kleinsten Querschnitt der jeweiligen Antriebsluftversorgung darstellt. Zwischen den axialen Enden der Turbinenschaufeln und dem feststehenden Gehäuseteil der Lagereinheit besteht ein Luftspalt, durch den ein Teil der Antriebsluft für den Antrieb verloren geht. Nachteilig ist auch eine turbulente Grenzschicht, die sich bei der betrachteten bekannten Radialturbine zwischen der strömenden Antriebsluft und dem feststehenden Gehäuseteil bildet und hohe Reibungsverluste verursacht. Infolgedessen ist die Leistungsfähigkeit der bekannten Radialturbine begrenzt.

Weiterhin ist zum Stand der Technik hinzuweisen auf FR 2 584 314 A1, US 3 804 335 und DE 1 426 847 A.

Ferner offenbart DE-PS 560 836 eine Axialturbine mit mehreren axial hintereinander angeordneten Turbinenstufen. Hierbei ist die Turbinenwelle in Kugellagern gelagert. Nachteilig an dieser Axialturbine ist die unbefriedigende Drehzahlfestigkeit, da Rotationszerstäuberturbinen mit extrem hohen Drehzahlen von teilweise mehr als 100.000 UpM betrieben werden sollen, wozu Kugellager in der Regel nicht geeignet sind. Diese Axialturbine ist also nicht für Rotationszerstäuber geeignet.

Aus GB 2 097 291 A ist ein Turbinenmotor gemäß dem Oberbegriff von Anspruch 1 bekannt. Hierbei ist jedoch auf der Antriebswelle nur eine einzige Turbine angeordnet. Nachteilig an diesem bekannten Turbinenmotor ist also die unbefriedigende mechanische Antriebsleistung des Turbinenmotors.

Der Erfindung liegt die Aufgabe zugrunde, einen Turbinenmotor für einen Rotationszerstäuber anzugeben, der höhere Antriebsleistungen und -drehzahlen als bei vergleichbaren bekannten Radialturbinen ermöglicht.

Diese Aufgabe wird durch den in den Patentansprüchen gekennzeichneten Turbinenmotor gelöst.

Durch die Erfindung wird die Turbine strömungstechnisch wesentlich verbessert. Insbesondere dadurch, dass der Antriebskanal nicht wie bisher nur einseitig begrenzt, sondern auch auf der anderen Seite durch ein mitrotierendes Element geschlossen wird, kann die Antriebsluft den geschlossenen Kanal verlustfrei und reibungsarm durchströmen.

Gemäss einem anderen Merkmal der Erfindung soll die Querschnittsfläche der Einlassöffnung, durch die die Antriebsluft aus einem Zuleitungskanal der Lagereinheit in den Antriebskanal der Turbine strömt, größer sein als die Querschnittsfläche des Zuleitungskanals an seiner Stelle kleinsten Querschnitts. Insbesondere kann der Einlass als sogenannte Laval- oder Überschalldüse ausgebildet sein, deren Querschnitt sich zunächst verengt und dann zur Erzeugung von Geschwindigkeiten der Gasströmung erweitert, die zumindest theoretisch im Überschallbereich liegen können. Überraschend wurde festgestellt, dass die sich hieraus im Vergleich mit den bisher üblichen Düsen ergebenden Änderungen der Geschwindigkeit und des Drucks der einströmenden Antriebsluft zu einer wesentlichen Verbesserung der Antriebsleistung der Turbine führen.

Durch die Erfindung kann die Turbine strömungstechnisch optimiert werden, wodurch vor allem höhere Drehzahlen als bisher ermöglicht werden. Bei einem Rotationszerstäuber wird mit der höheren Drehzahl eine höhere Ausflussrate des Beschichtungsmaterials an dem von der Turbine angetriebenen Glockenteller erreicht.

Vorzugsweise beträgt die Masse der gesamten, bekanntlich als modulartige Baueinheit auswechselbaren Motoreinheit (ohne Glockenteller) weniger als 0,8 kg, was bisher nur bei wesentlich leistungsschwächeren Turbinenmotoren der betrachteten Gattung möglich war.

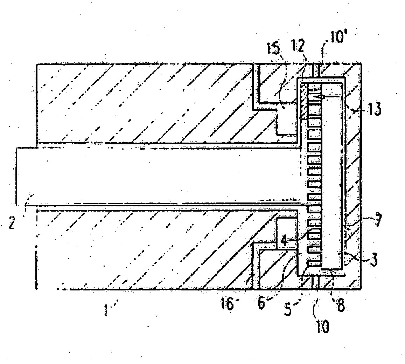

An dem in der Zeichnung dargestellten Ausführungsbeispiel wird die Erfindung näher erläutert, wobei die Zeichnung ein Ausführungsbeispiel mit einer Radialturbine zeigt, das somit nicht erfindungsgemäß ist. Die Zeichnung zeigt in schematisch vereinfachter Darstellung einen Schnitt durch die Lagereinheit eines Rotationszerstäubers längs der Achse der Antriebswelle.

Die den hier beschriebenen Turbinenmotor bildende Lagereinheit hat ein feststehendes Gehäuse 1, in dem die Antriebswelle 2 in einem zwischen dem Gehäuse und der Welle gebildeten Luftlager rotiert. An dem einen Ende der Antriebswelle 2 ist das scheibenförmige Turbinenrad 3 angeordnet, dem auf einem in der Nähe des Scheibenumfangs liegenden Ringbereich seiner der Welle zugewandten axialen Stirnfläche 4 der radial zu durchströmende Kranz von Turbinenschaufeln 5 angeformt sind. Das Turbinenrad 3 rotiert in einem entsprechend dem Turbinenrad bemessenen zylindrischen Innenraum 6 des Gehäuses 1 mit nahe an die rückseitige ebene Stirnfläche 7 und die zylindrische Umfangsfläche 8 des Turbinenrades angrenzenden Wänden. Auf der entgegengesetzten, in der Zeichnung linken Seite wird der Innenraum 6 von einer weiteren radial verlaufenden Wandfläche des feststehenden Gehäuses 1 begrenzt, die in der Mitte die Öffnung für die Welle 2 bildet und radial außerhalb dieser Öffnung der axialen Stirnfläche 4 des Turbinenrades 3 mit dem dargestellten axialen Abstand von den Enden der Turbinenschaufeln 5 gegenübersteht. Radial außerhalb des Umfangs des Turbinenrades 3 und in axialer Richtung mit den Turbinenschaufeln 5 ausgerichtet mündet in den Innenraum 6 ein Einlass 10 für die Antriebsluft der Turbine, die aus einem durch das Gehäuse 1 verlaufenden Zuleitungskanal kommt. Bei 10' kann ein weiterer Lufteinlass vorgesehen sein. Üblicherweise enthält das Gehäuse 1 getrennte Einlässe für Antriebsluft und Bremsluft (EP 1 245 292 A1). Die Antriebswelle kann als Hohlwelle ausgebildet sein, in deren anderes Ende der (nicht dargestellte) Glockenteller des Rotationszerstäubers geschraubt wird.

Soweit sie bisher beschrieben wurde, kann die dargestellte Lagereinheit an sich dem Stand der Technik üblicher Rotationszerstäuber entsprechen. Hierbei ist jedoch an dem Turbinenrad 3 auf der Seite der Stirnfläche 4 eine kreisringförmige Abdeckscheibe 12 befestigt, die unmittelbar an den axial von der Stirnfläche 4 abstehenden Enden der Turbinenschaufeln 5 anliegt und mit ihnen rotiert. Zur Verdeutlichung des Unterschiedes zum Stand der Technik ist nur ihre obere Hälfte dargestellt. Die Abdeckscheibe 12 kann beispielsweise an die axial vorspringenden Enden der Turbinenschaufeln 5 angeklebt, angeschweisst oder auf andere Weise an ihnen befestigt sein. Zwischen der Stirnfläche 4 und dieser Abdeckscheibe 12 ist somit ein auf beiden Seiten der Turbinenschaufeln 5 axial geschlossener Antriebskanal 13 gebildet, in dem die aus dem Lufteinlass 10 wenigstens annähernd tangential und ggf. mit einer radial nach innen gerichteten Komponente zugeführte Druckluft verlustfrei und reibungsarm zwischen den Turbinenschaufeln hindurchfließt. Radial innerhalb des die Turbinenschaufeln enthaltenden Ringflächenbereiches fließt die nach Abgabe der Antriebsenergie an die Welle entspannte Luft in eine oder mehrere als Luftauslass dienende Ausnehmungen 15 und Kanäle 16 des Gehäuses 1 ab.

Es ist denkbar, Turbinenschaufeln in dem beschriebenen geschlossenen Antriebskanal nicht nur auf einer, sondern auf beiden Seiten des Turbinenrades vorzusehen.
Die Querschnittsfläche der Mündungsöffnung am Lufteinlass 10, also am Austrittspunkt der Antriebsluft, ist vorzugsweise größer als der kleinste Querschnitt der davor liegenden Kanäle der Lagereinheit, in der die Antriebsluft in an sich bekannter Weise durch mindestens eine Bohrung in einen ringsegmentförmigen Zuleitungskanal und aus diesem in eine oder mehr Düsen gelangt. Im Gegensatz zu den bisher üblichen Düsen mit sich stetig bis zur Mündungsöffnung verkleinerndem Querschnitt, in denen das strömende Medium nur bis weniger als Schallgeschwindigkeit beschleunigt werden kann, ist der Lufteinlass 10 z.B. als Laval-Düse ausgebildet, deren Querschnitt sich zunächst verengt und sich dann bis zur Mündungsöffnung erweitert, um im erweiterten Düsenteil Überschallgeschwindigkeiten zu erzeugen. Derartige Überschalldüsen können nicht nur für die hier beschriebene Radialturbine, sondern auch für andersartige Turbinenmotoren zur Leistungssteigerung vorteilhaft sein.

Das vorstehend beschriebene, nicht erfindungsgemäße Ausführungsbeispiel kann in Richtung der Erfindung abgewandelt werden.

Beispielsweise besteht die Möglichkeit, die Schaufelelemente zwischen einer geschlossenen zylindrischen Fläche am Umfang des Turbinenrades und einer von ihr radial beabstandeten inneren, ebenfalls geschlossenen zylindrischen Fläche anzuordnen, so dass ein beidseitig radial begrenzter Antriebskanal gebildet ist, wobei die Schaufelelemente axial angeströmt werden und sich Luftauslässe am axial entgegengesetzten Ende des ringförmigen Antriebskanals befinden können.

Weiterhin sieht die Erfindung vor, mehr als nur eine Turbine auf einer ihnen gemeinsamen Welle anzuordnen.

## Patentansprüche

1. Rotationszerstäuber-Turbinenmotor zum Antrieb eines Glockentellers eines Rotationszerstäubers, mit
a) einer Antriebswelle,
b) einer Lagereinheit für die Antriebswelle des Rotationszerstäuber-Turbinenmotors,
c) einem feststehenden Gehäuse,
d) einem Turbinenrad, das
d1) an der Antriebswelle angeordnet ist und
d2) in einem Innenraum des Gehäuses der Lagereinheit rotiert und
d3) an einer Trägerfläche Schaufelelemente aufweist,
e) einem Antriebskanal,
e1) der die Schaufelelemente enthält und
e2) der auf seiner der Trägerfläche des Turbinenrades gegenüberliegenden Seite von einem an die Schaufelelemente angrenzenden Element begrenzt ist,
e3) wobei die Schaufelelemente zwischen einer geschlossenen zylindrischen Fläche am Umfang des Turbinenrades und einer von ihr radial beabstandeten inneren, ebenfalls geschlossenen zylindrischen Fläche angeordnet sind, so dass der Antriebskanal beidseitig radial begrenzt ist,
f) einem aus dem Gehäuse in dessen Innenraum führenden Einlass für ein Antriebsgas wie insbesondere Druckluft, das durch den Antriebskanal strömt,
g) einem Auslass für das aus dem Innenraum abfließende Antriebsgas,
h) wobei die Schaufelelemente axial angeströmt werden, **dadurch gekennzeichnet,**
i) **dass** auf der Antriebswelle mehrere Turbinen angeordnet sind, und
j) **dass** die Lagereinheit ein Luftlager aufweist, das zwischen dem feststehenden Gehäuse und der Welle gebildet ist und in dem die Antriebswelle rotiert.

2. Rotationszerstäuber-Turbinenmotor nach Anspruch 1, **dadurch gekennzeichnet, dass** die zylindrische Fläche am Umfang des Turbinenrades mitrotiert.

3. Rotationszerstäuber-Turbinenmotor nach einem der vorhergehenden Ansprüche, **dadurch gekennzeichnet,**
a) **dass** die Lagereinheit einen Zuleitungskanal zur Zuleitung der Antriebsluft aufweist,
b) **dass** der Einlass eine Einlassöffnung aufweist, durch die die Antriebsluft aus dem Zuleitungskanal der Lagereinheit in den Antriebskanal des Rotationszerstäuber-Turbinenmotors strömt,
c) **dass** der Querschnittsfläche der Einlassöffnung größer ist als die Querschnittsfläche des Zuleitungskanals an seiner Stelle kleinsten Querschnitts.

4. Rotationszerstäuber-Turbinenmotor nach einem der vorhergehenden Ansprüche, **dadurch gekennzeichnet, dass** der Einlass als Lavaldüse oder als Überschalldüse ausgebildet ist.

5. Rotationszerstäuber-Turbinenmotor nach einem der vorhergehenden Ansprüche, **gekennzeichnet durch** eine Masse von weniger als 0,8kg.

6. Rotationszerstäuber einer Anlage für die Serienbeschichtung von Werkstücken mit einem Rotationszerstäuber-Turbinenmotor nach einem der vorangehenden Ansprüche.

## Claims

1. Rotary atomizer turbine engine for driving a bell cup of a rotary atomizer with
a) a drive shaft,
b) a bearing unit for the drive shaft of the rotary atomizer turbine engine,
c) a stationary housing,
d) a turbine wheel which
d1) is arranged on the drive shaft and
d2) rotates in an interior space of the housing of the bearing unit and
d3) comprises blade elements on a carrier surface,
e) a drive channel
e1) which comprises the blade elements and
e2) which is confined on its side opposite the carrier surface of the turbine wheel by an element joining the blade elements,
e3) wherein the blade elements are arranged between a closed cylindrical surface on the circumference of the turbine wheel and a radially spaced inner, likewise closed cylindrical surface, so that the drive channel is radially confined on both sides,
f) an inlet leading from the housing into its interior space for a driving gas, particularly pressurised air, which flows through the drive channel,
g) an outlet for the driving gas flowing out of the interior space,
h) wherein the blade elements are streamed in axially, **characterized**
i) **in that** several turbines are arranged on the drive shaft, and
j) **in that** the bearing unit comprises an air bearing which is formed between the stationary housing and the shaft and in which the drive shaft rotates.

2. Rotary atomizer turbine engine according to claim 1, **characterized in that** the cylindrical surface on the circumference of the turbine wheel also rotates.

3. Rotary atomizer turbine engine according to one of the preceding claims, **characterized**
a) **in that** the bearing unit comprises a supply channel for supplying the driving air,
b) **in that** the inlet comprises an inlet opening through which the driving air flows from the supply channel of the bearing unit into the driving channel of the rotary atomizer turbine engine,
c) **in that** the cross sectional area of the inlet opening is bigger than the cross sectional area of the supply channel at its point of smallest cross section.

4. Rotary atomizer turbine engine according to one of the preceding claims, **characterized in that** the inlet is formed as a Laval nozzle or a supersonic nozzle.

5. Rotary atomizer turbine engine according to one of the preceding claims, **characterized by** a mass of less than 0.8kg.

6. Rotary atomizer of a plant for series coating of work pieces with a rotary atomizer turbine engine according to one of the preceding claims.

## Revendications

1. Moteur à turbine de pulvérisateur rotatif servant à entraîner un plateau à cloche d'un pulvérisateur rotatif, comprenant
a) un arbre d'entraînement,
b) une unité formant palier pour l'arbre d'entraînement du moteur à turbine de pulvérisateur rotatif,
c) un boîtier immobile,
d) une roue de turbine, qui
d1) est disposée au niveau de l'arbre d'entraînement et
d2) tourne dans un espace intérieur du boîtier de l'unité formant palier, et
d3) présente au niveau d'une surface de support des éléments à pales,
e) un canal d'entraînement,
e1) qui contient les éléments à pale et
e2) qui est délimité, sur son côté faisant face à la surface de support de la roue de turbine, par un élément jouxtant les éléments à pale,
e3) dans lequel les éléments à pale sont disposés entre une surface cylindrique fermée au niveau de la périphérie de la roue de turbine et une surface cylindrique également fermée intérieure espacée radialement de cette dernière de sorte que le canal d'entraînement est délimité de manière radiale de part et d'autre,
f) une entrée, menant depuis le boîtier dans l'espace intérieur de ce dernier, pour un gaz d'entraînement, tel que de l'air comprimé, qui circule à travers le canal d'entraînement,
g) une sortie pour le gaz d'entraînement s'écoulant hors de l'espace intérieur,
h) dans lequel les éléments à pale sont parcourus par un flux axial,
**caractérisé en ce**
i) **que** plusieurs turbines sont disposées sur l'arbre d'entraînement, et
j) **que** l'unité formant palier présente un palier à air, qui est formé entre le boîtier immobile et l'arbre et dans lequel l'arbre d'entraînement tourne.

2. Moteur à turbine de pulvérisateur rotatif selon la revendication 1, **caractérisé en ce que** la surface cylindrique est entraînée en rotation au niveau de la périphérie de la roue de turbine.

3. Moteur à turbine de pulvérisateur rotatif selon l'une quelconque des revendications précédentes, **caractérisé en ce**
a) **que** l'unité formant palier présente un canal d'arrivée servant à l'arrivée de l'air d'entraînement,
b) **que** l'entrée présente une ouverture d'entrée, par laquelle l'air d'entraînement circule hors du canal d'arrivée de l'unité formant palier dans le canal d'entraînement du moteur à turbine de pulvérisateur rotatif,
c) **que** la surface de section transversale de l'ouverture d'entrée est plus grande que la surface de section transversale du canal d'arrivée au niveau de l'emplacement de sa section transversale la plus petite.

4. Moteur à turbine de pulvérisateur rotatif selon l'une quelconque des revendications précédentes, **caractérisé en ce que** l'entrée est réalisée sous la forme d'une tuyère Laval ou sous la forme d'une tuyère supersonique.

5. Moteur à turbine de pulvérisateur rotatif selon l'une quelconque des revendications précédentes, **caractérisé par** une masse inférieure à 0,8 kg.

6. Pulvérisateur rotatif d'une installation pour le revêtement en série de pièces à usiner, comprenant un moteur à turbine de pulvérisateur rotatif selon l'une quelconque des revendications précédentes.
